# EUROPEAN PATENT APPLICATION

(11) **EP 4 693 809 A1**
(43) Date of publication of application: **11.02.2026**
(21) Application number: 25774820.2
(22) Date of filing: 07.01.2025
(51) Int. Cl.: H02J 7/00, H01M 10/44, B60L 58/22

(54) **BATTERY SYSTEM AND OPERATING METHOD THEREOF**

(30) Priority: 20.03.2024 KR 20240038196
(71) Applicant: LG Energy Solution, Ltd., Seoul 07335 (KR)
(72) Inventor: JEONG, Jongmun, Daejeon 34122 (KR)
(74) Representative: BCKIP Part mbB
(86) International application number: PCT/KR2025/000295
(87) International publication number: WO 2025/198156

(57) **Abstract**

A battery system according to an embodiment of the present invention may comprise: a plurality of batteries; and a battery control device for controlling a main switch arranged on an input/output path of each of the plurality of batteries, so that the batteries are controlled to be connected in parallel to a DC link. Here, the battery control device may select target batteries to be connected in parallel, on the basis of the state information of the batteries, and control the target batteries to be connected in parallel such that the target batteries are connected to the DC link at different time points by sequentially controlling main switches of the respective target batteries.

## Description

### [Technical Field]

This application claims priority to and the benefit of Korean Patent Application No. 10-2024-0038196 filed in the Korean Intellectual Property Office on March 20, 2024 the entire contents of which are incorporated herein by reference.

The present invention relates to a battery system and an operating method thereof, and more particularly, to a battery system including a battery control apparatus for controlling main switches of respective batteries and, an operating method thereof.

### [Background Art]

Secondary batteries, capable of recharging and reuse, may be used as an energy source for small devices such as mobile phones, tablet PCs and vacuum cleaners, and also used as an energy source for medium and large devices such as automobiles and an energy storage system (ESS) for smart grids.

Secondary batteries may be applied to a system in a form of an assembly such as a battery pack in which a plurality of battery cells is electrically connected or a battery rack in which battery packs are electrically connected according to system requirements. For energy storage systems for smart grids, a high-capacity battery system with multiple battery racks connected in parallel may be applied to satisfy required capacity of the system.

When a voltage difference occurs between battery racks during the operation of the battery system, rack balancing control is performed to minimize this voltage difference. Here, in the case of a battery system including multiple racks connected in parallel, racks satisfying a predetermined voltage imbalance condition are connected in parallel with each other and active balancing of the parallel-connected racks is performed, thereby resolving the voltage imbalance between the racks.

Generally, an upper control device (e.g., Bank Battery Management System) may control balancing target racks to be simultaneously connected to the DC link by switching a main switch (e.g., positive main contactor) of each of the racks to be balanced to a closed state. Here, a certain RBMS (Rack Battery Management System) may be reset due to insufficient capacity of a power supply device (e.g., Switching Mode Power Supply) that supplies power to the main switch of each of the racks, resulting in a communication error between the upper control device and the corresponding RBMS.

One of prior art documents related to the present invention is KR 10-2015-0025215.

### [Detailed Description of the Invention]

### [Technical Problem]

To obviate one or more problems of the related art, embodiments of the present disclosure provide an battery system which prevents communication error that may occur when performing battery balancing.

To obviate one or more problems of the related art, embodiments of the present disclosure also provide a method of operating the battery system.

To obviate one or more problems of the related art, embodiments of the present disclosure also provide an battery control apparatus located in the battery system.

### [Technical Solution]

In order to achieve the objective of the present disclosure, a battery system according to embodiments of the present invention may include a a plurality of batteries; and a battery control apparatus configured to control a main switch arranged on an input/output path of each of the plurality of batteries so that the batteries are connected in parallel to a direct current (DC) link.

Here, the battery control apparatus is further configured to select target batteries to be connected in parallel based on state information of the batteries and to control the target batteries to be connected in parallel while sequentially controlling respective main switches of the target batteries so that the target batteries are connected to the DC link at different times.

The battery control apparatus may further be configured to determine a battery that satisfies a predefined imbalance condition based on at least one of a voltage value or a state of charge (SOC) value, as a target battery.

The battery control apparatus may further be configured to determine priority for controlling the target batteries based on one of an identifier, a state value, and a location of the battery.

The battery control apparatus may further be configured to switch a positive main switch of a first target battery to a closed state and to subsequently switch a positive main switch of a second target battery to a closed state.

The battery system may further include pre-charge circuits, each of which is connected in parallel with a positive main switch of each of the plurality of batteries and includes a pre-charge resistor and a pre-charge switch. Here, the battery system may further be configured to switch a pre-charge switch of a first target battery to a closed state and subsequently switch a positive main switch of the first target battery to a closed state; and subsequently, switch a pre-charge switch of a second target battery to a closed state and subsequently switch a positive main switch of the second target battery to a closed state.

The battery control apparatus may further be configured to switch the positive main switch of the first target battery to a closed state and subsequently switch the pre-charge switch of the first target battery to an open state; and switch the pre-charge switch of the second target battery to a closed state at the time when the pre-charge switch of the first target battery is switched to an open state.

The battery control apparatus may further be configured to switch the pre-charge switch and a negative main switch of the first target battery to a closed state and subsequently switch the positive main switch of the first target battery to a closed state; and subsequently, switch the pre-charge switch and a negative main switch of the second target battery to a closed state and subsequently switch the positive main switch of the second target battery to a closed state.

The battery control apparatus may further be configured to switch the positive main switch of the first target battery to a closed state and subsequently switch the pre-charge switch of the first target battery to an open state; and switch the pre-charge switch and the negative main switch of the second target battery to a closed state at the time when the pre-charge switch of the first target battery is switched to an open state.

The battery may correspond to any one of a battery module, a battery pack, a battery rack, and a battery bank.

According to another embodiment of the present disclosure, a method of operating a battery system, by a battery control apparatus located in the battery system including a plurality of batteries which are capable of being connected in parallel to a direct current (DC) link, may include selecting target batteries that are targets of parallel connection based on state information of the plurality of batteries; and sequentially controlling main switches arranged on input/output paths of respective target batteries so that the target batteries are connected to the DC link at different times.

The selecting the target batteries may include determining a battery that satisfies a predefined imbalance condition based on at least one of a voltage value or a state of charge (SOC) value, as a target battery.

The sequentially controlling the main switches may include determining priority for controlling the target batteries based on one of an identifier, a state value, and a location of the battery.

The sequentially controlling the main switches may include switching a positive main switch of a first target battery to a closed state; and subsequently switching a positive main switch of a second target battery to a closed state.

The battery system may further include pre-charge circuits, each of which is connected in parallel with the positive main switch of each of the plurality of batteries and includes a pre-charge resistor and a pre-charge switch. Here, the sequentially controlling the main switches may include switching a pre-charge switch of a first target battery to a closed state and subsequently switching a positive main switch of the first target battery to a closed state; and subsequently, switching a pre-charge switch of a second target battery to a closed state and subsequently switching a positive main switch of the second target battery to a closed state.

The sequentially controlling the main switches may include switching the positive main switch of the first target battery to a closed state and subsequently switching the pre-charge switch of the first target battery to an open state; and switching the pre-charge switch of the second target battery to a closed state at the time when the pre-charge switch of the first target battery is switched to an open state.

According to another embodiment of the present disclosure, a battery control apparatus, located in a battery system including a plurality of batteries which are capable of being connected in parallel to a direct current (DC) link, may include at least one processor; and a memory configured to store at least one instruction executed by the at least one processor.

Here, the at least one instruction may include an instruction to select target batteries that are targets of parallel connection based on state information of the batteries; and an instruction to sequentially control main switches arranged on input/output paths of respective target batteries so that the target batteries are connected to the DC link at different times.

### [Advantageous Effects]

According to embodiments of the present disclosure, communication errors within a battery system that may occur when performing battery balancing can be prevented by controlling balancing target batteries to be connected to a direct current (DC) link with a time difference.

### [Brief Description of the Drawings]

FIG. 1 is a block diagram of a general energy storage system.
FIG. 2 is a block diagram illustrating a battery system according to embodiments of the present invention.
FIG. 3 is a circuit diagram for explaining the input/output path of the battery according to embodiments of the present invention.
FIG. 4 is a flowchart of a method of operating a battery system according to embodiments of the present invention.
FIG. 5 is a reference diagram for explaining an operating method of a battery system according to an embodiment of the present invention.
FIG. 6 is a reference diagram for explaining a method of operating a battery system according to another embodiment of the present invention.
FIG. 7 is a reference diagram for explaining an operating method of a battery system according to another embodiment of the present invention.
FIG. 8 is a block diagram of a battery control apparatus according to embodiments of the present invention.

100 : battery
200 : battery control apparatus

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it may be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

A battery cell is a basic unit that serves to store power and a battery module refers to an assembly in which a plurality of battery cells is electrically connected.

A battery rack refers to a system of a single structure which is assembled by connecting module units set by a battery manufacturer in series/parallel and may be monitored and controlled by a battery management apparatus/system (BMS). A battery rack may include several battery modules and a battery protection unit or any other protection device. Here, the battery module may also be referred to as a battery pack depending on a device or system in which the battery is used.

A battery bank refers to a group of large-scale battery rack systems configured by connecting a plurality of battery racks in parallel. A bank BMS for a battery bank may monitor and control several rack BMSs, each of which manages a battery rack.

A battery assembly may include a plurality of electrically connected battery cells, and refers to an assembly that functions as a power supply source by being applied to a specific system or device. Here, the battery assembly may mean a battery module, a battery pack, a battery rack, or a battery bank, but the scope of the present invention is not limited to these entities.

A battery system controller (BSC) is a device that performs top-level control of a battery system including a battery bank-based system, which may also be used as a control device in a battery system with multiple bank level structures.

State of Charge (SOC) refers to a current state of charge of a battery, represented in percent points [%], and State of Health (SOH) may be a current condition of a battery compared to its ideal or original conditions, represented in percent points [%].

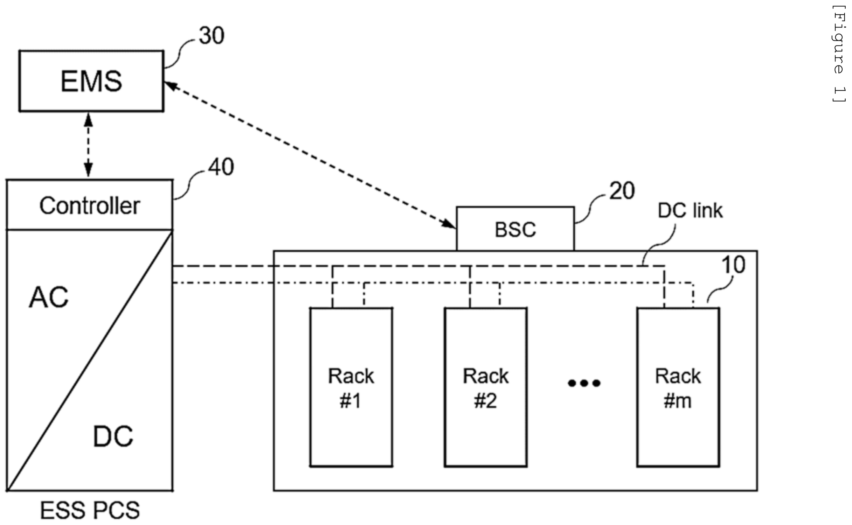

FIG. 1 is a block diagram of a general energy storage system.

In an energy storage system (ESS), a basic unit of battery for storing energy or power is a battery cell. Typycally, a seris/parallel combination of battery cells may form a battery module and multiple battery module may form a battery rack. In other words, a battery rack as a series/parallel combination of battery modules may be a basic unit of a battery system. Here, a battery module may be referred to as a battery pack depending on a device or a system in which the battery is used.

Referring to FIG. 1, a battery rack 10 may include multiple battery modules and a battery protection unit or any other protection device. A battery rack may be monitored and controlled through a rack battery management system (rack BMS). The RBMS may monitor a current, a voltage and a temperature of each battery rack to be managed, calculate a state of charge (SOC) of the battery based on a monitoring result, and control charging and discharging.

Meanwhile, the battery protection unit (BPU) is a device for protecting the battery from abnormal current and fault current in a battery rack. The BPU may include a main contactor (MC), a fuse, a circuit breaker (CB), or a disconnect switch (DS). Here, the main contactor may include a positive main contactor and a negative main contactor. The BPU may control the battery system rack by rack by controlling the main contactor on/off according to control of the RBMS. The BPU may also protect the battery from short-circuit current by using a fuse when a short-circuit occurs. As such, the existing battery system may be controlled through a protection device such as a BPU or a switch gear.

In addition, a battery system controller (BSC) 20 may be located in each battery section which includes a plurality of batteries, peripheral circuits, and devices, so as to monitor and control objects such as a voltage, a current, a temperature, and a circuit breaker. The battery system controller may be a top-level controller of a bank-level battery system including a plurality of battery racks and is also used as a controller in a battery system with a multiple bank-level structure.

Furthermore, a power conversion system (PCS) 40 installed in each battery section may perform actual charging/discharging based on a charge/discharge command from an energy management system (EMS) 30. The power conversion system may include a DC/AC inverter and a controller. Meanwhile, the output of each BPU may be connected to a power generation device (e.g., phtovoltaic system) and the PCS 40 which is connected to a power grid, through a DC link (or DC bus). In addition, the energy management system (EMS) 30 or the power management system (PMS) may control the energy storage system in overall.

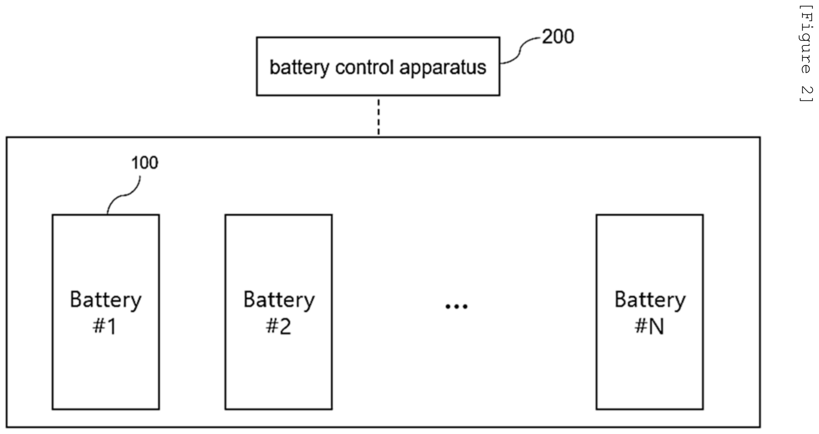

FIG. 2 is a block diagram illustrating a battery system according to embodiments of the present invention.

Referring to FIG. 2, a battery system according to embodiments of the present invention may include a plurality of batteries 100, and a battery control apparatus 200 configured to manage and control the plurality of batteries.

In the present invention, the battery 100 may mean a battery rack, but the scope of the present invention is not limited thereto. For example, the battery 100 may correspond to any one of a battery module, a battery pack, a battery rack, and a battery bank.

The batteries 100 may be connected in parallel with each other. Here, the batteries 100 may be individually connected to a direct current (DC) link and thus, connected in parallel with other batteries.

Each of the batteries 100 may include main switches arranged on the input/output path. Here, the battery 100 may be connected or disconnected from the DC link by on/off control of the main switch.

Each of the batteries 100 may further include a pre-charge circuit arranged on the input/output path. Here, the pre-charge circuit may include pre-charge resistor and a pre-charge switch which are connected in series.

Each of the batteries 100 may include a battery management device (BMS) therein. Here, the battery control apparatus 200 may correspond to an upper control device that is connected with the battery management devices of each of the batteries 100, and may correspond to, for example, a bank BMS (BBMS), a battery system controller (BSC), an energy management system (EMS), or a power management system (PMS), that is connected with a plurality of RBMSs.

The battery control apparatus 200 may control the operation of the main switch of each of the batteries 100. In addition, the battery control apparatus 200 may control the operation of the pre-charge switch of each of the batteries 100.

The battery control apparatus 200 may collect state information of the batteries 100. Here, the state information may include one or more of a voltage value, a current value, a SOC value, and a temperature value of the battery.

The battery control apparatus 200 may select target batteries that are connected in parallel. Here, the battery control apparatus 200 may determine a battery satisfying a predefined imbalance condition among the batteries 100 as a target battery.

The battery control apparatus 200 may control the main switches and the pre-charge switches of the target batteries so that the target batteries are connected in parallel with each other. Here, the battery control apparatus 200 may control the operation of the main switch and the pre-charge switch of the target battery by transmitting a switch control signal to a battery management device (BMS) of the target battery.

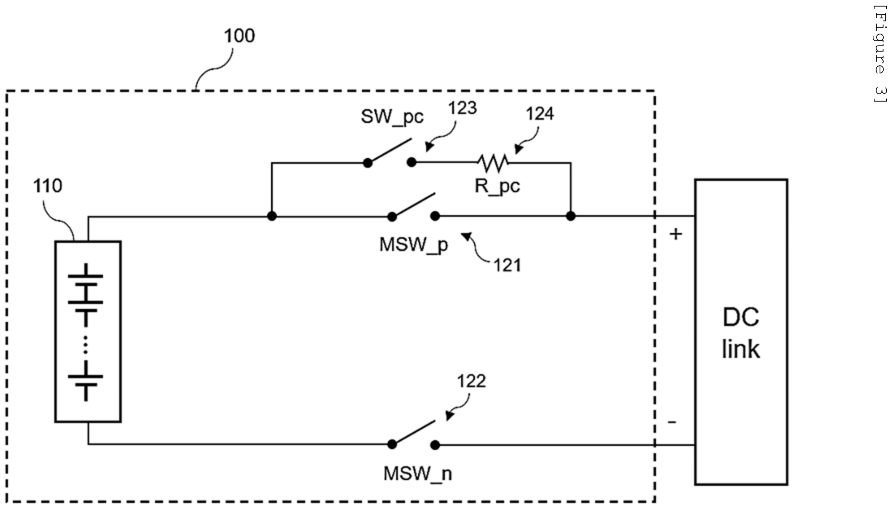

FIG. 3 is a circuit diagram for explaining the input/output path of the battery according to embodiments of the present invention.

Each of the batteries 100 may include a plurality of battery cells 110 and a main switch arranged on the input/output path.

The main switch of the battery 100 may include a positive main switch 121 arranged on the positive line. Here, when the positive main switch 121 is switched from an OFF (open) state to an ON (closed) state, it is electrically connected to the DC link, so that the battery 100 may be connected in parallel with another battery. On the contrary, when the positive main switch 121 is switched from an ON (closed) state to an OFF (open) state, the electrical connection to the DC link is cut off, so that the parallel connection between the battery 100 and another battery may be released.

The main switch of the battery 100 may further include a negative main switch 122 arranged on the negative line. Here, when the positive main switch 121 and the negative main switch 122 are switched from an open state to a closed state, they are electrically connected to the DC link so that the battery 100 may be connected in parallel with another battery. Conversely, when either one of the positive main switch 121 and the negative main switch 122 is switched from a closed state to an open state, the electrical connection to the DC link is cut off, so that the parallel connection between the battery 100 and the another battery may be released.

Each of the batteries 100 may further include a pre-charge circuit arranged on the input/output path. Here, the pre-charge circuit is connected with the positive main switch 121 in parallel and may include a pre-charge resistor 124 and a pre-charge switch 123 that are connected in series. Here, when the pre-charge switch 123 and the negative main switch 122 are switched from an open state to a closed state, and then, the positive main switch 121 is switched from an open state to a closed state, the battery 100 may be connected in parallel with another battery. Afterwards, the pre-charge switch 123 may be switched from a closed state to an open state.

The battery control apparatus 200 may determine batteries satisfying a predefined imbalance condition among a plurality of batteries 100 as target batteries, and control the positive main switch 121, the negative main switch 122, and the pre-charge switch 123 of each target battery so that the target batteries are connected in parallel with one another. Here, the battery control apparatus 200 may control the on/off operation of the positive main switch 121, the negative main switch 122, and the pre-charge switch 123 of the target batteries by transmitting a switch control signal to a battery management device (BMS) of each of the target batteries.

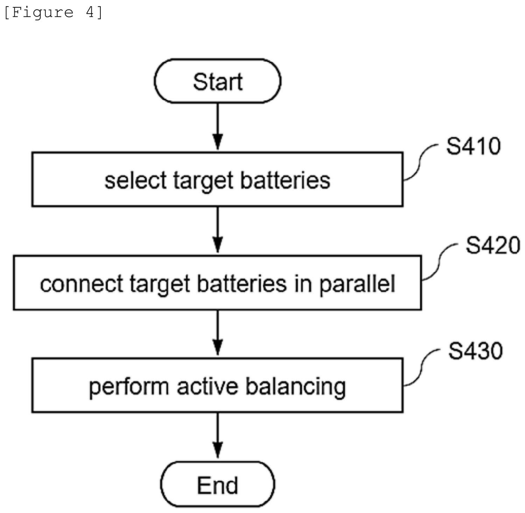

FIG. 4 is a flowchart of a method of operating a battery system according to embodiments of the present invention.

The operation method of a battery system according to embodiments of the present invention may be performed by a battery control apparatus located in a battery system. Here, the battery control apparatus 200 may correspond to an upper control device that is connected with the battery management devices of each of the batteries 100, and may correspond to, for example, a bank BMS (BBMS), a battery system controller (BSC), an energy management system (EMS), or a power management system (PMS), that is connected with a plurality of RBMSs.

The battery control apparatus may select target batteries that are targets to be connected in parallel (or balancing targets) among the multiple batteries (S410). Here, the battery control apparatus may determine a battery that satisfies a predefined imbalance condition as a target battery.

In embodiments, the imbalance condition may be predefined based on one or more of a voltage value and a SOC value. For example, the imbalance condition may be defined as a battery that exhibits a difference equal to or greater than a threshold range from a predefined reference voltage value (or reference SOC value). Meanwhile, the imbalance condition may be defined in various ways as a condition for selecting a battery that is a balancing target, as needed.

The battery control apparatus may perform active balancing on the target batteries (S430) by connecting the target batteries selected in S410 in parallel (S420).

Here, the battery control apparatus may sequentially control the main switch of each target battery with a time difference so that the target batteries are connected to the DC link at different times.

The battery control apparatus may determine priority for sequential control of the target batteries. Here, the battery control apparatus may determine the control priority based on one of an identifier of the battery, a state value of the battery, and a location of the battery.

For example, the battery control apparatus may check a predefined identification number for each of the target batteries and sequentially assign priority starting from a battery with a lower identification number.

For another example, the battery control apparatus may check a state value (e.g., a voltage value or a SOC value) for each of the target batteries and sequentially assign priority starting from a battery with a smaller difference from a reference state value.

As another example, the battery control apparatus may check a predefined location identifier for each of the target batteries and sequentially assign priorities starting from the battery closest to the PCS.

The battery control apparatus may sequentially control the main switches of target batteries according to the priorities of the target batteries so that the target batteries are connected to the DC link at different times. For example, the battery control apparatus may switch the positive main switch of a first target battery (the target battery with the Nth priority) to a closed state, and then switch the positive main switch of a second target battery (the target battery with the N+1th priority) to a closed state so that the first target battery and the second target battery are connected to the DC link with a time difference. Accordingly, a communication error in the battery system due to a lack of capacity of a power supply device that supplies power to the switch of each battery may be prevented.

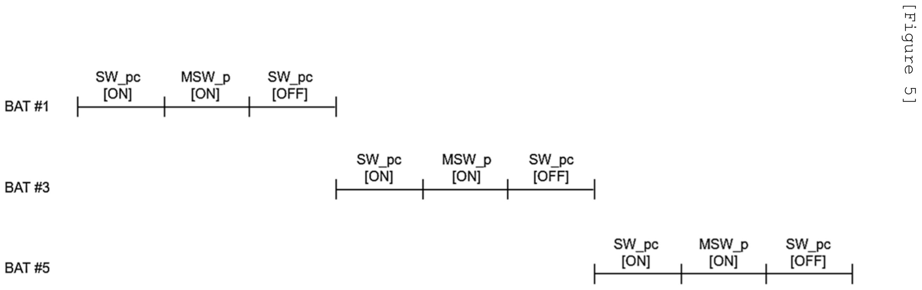

FIG. 5 is a reference diagram for explaining a method of operating a battery system according to an embodiment of the present invention. Hereinafter, with reference to FIG. 5, an embodiment of an operating method of a battery system in which a positive main switch and a pre-charge circuit are provided on an input/output path of a battery and a negative main switch is not provided, will be described.

The battery control apparatus may sequentially connect target batteries selected as balancing targets to the DC link in parallel according to priorities.

Here, the battery control apparatus may switch the pre-charge switch (SW_pc) of a first target battery (target battery of the Nth priority) to an ON (closed) state, and then switch the positive main switch (MSW_p) of the first target battery to an ON (closed) state.

Thereafter, the battery control apparatus may switch the pre-charge switch (SW_pc) of a second target battery (the target battery of the N+1th priority) to an ON (closed) state, and then switch the positive main switch (MSW_p) of the second target battery to an ON (closed) state.

For example, as illustrated in FIG. 5, if batteries #1, #3, and #5 among a plurality of batteries are selected as target batteries, and the control priority may be determined in the order of batteries #1, #3, and #5, the battery control apparatus may switch the pre-charge switch (SW_pc) of battery #1 to an ON (closed) state, then switch the positive main switch (MSW_p) of battery #1 to an ON (closed) state, and then switch the pre-charge switch (SW_pc) of battery #1 to an OFF (open) state.

Thereafter, the battery control apparatus may sequentially control the pre-charge switches (SW_pc) and the positive main switches (MSW_p) of batteries #3 and #5, respectively as illustrated in FIG. 5, so that batteries #1, #3, and #5 are sequentially connected to the DC link.

If the switching time of each switch is 1 second, batteries #1, #3, and #5 may be connected to the DC link at 2 seconds, 5 seconds, and 8 seconds (at the time MSW_p is closed), respectively, after the initiation of balancing control.

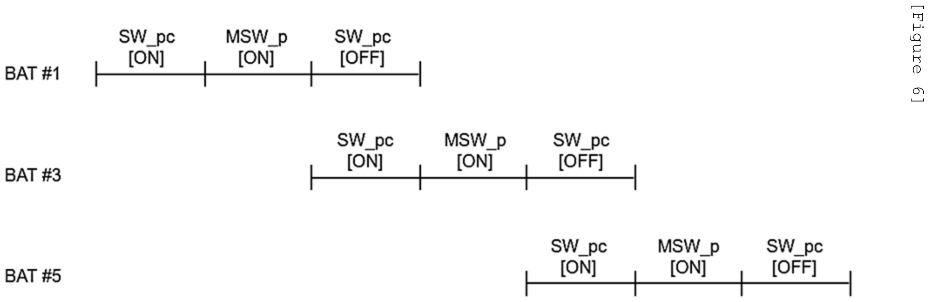

FIG. 6 is a reference diagram for explaining a method of operating a battery system according to another embodiment of the present invention. Hereinafter, another embodiment different from the operating method of the battery system described in FIG. 5 will be explained with reference to FIG. 6.

The battery control apparatus may sequentially connect target batteries selected as balancing targets in parallel to the DC link according to priority.

Here, the battery control apparatus may switch the pre-charge switch (SW_pc) of the a first target battery (the target battery of the Nth priority) to an ON (closed) state, and then switch the positive main switch (MSW_p) of the first target battery to an ON (closed) state. Thereafter, the battery control apparatus may switch the pre-charge switch (SW_pc) of the first target battery to the OFF (open) state.

Thereafter, the battery control apparatus may switch the pre-charge switch (SW_pc) of a second target battery (the target battery of the N+1th priority) to an ON (closed) state, and then, switch the positive main switch (MSW_p) of the second target battery to an ON (closed) state. Thereafter, the battery control apparatus may switch the pre-charge switch (SW_pc) of the second target battery to an OFF (open) state.

Here, the battery control apparatus may switch the pre-charge switch (SW_pc) of the second target battery to an ON (closed) state at the time when the pre-charge switch (SW_pc) of the first target battery is switched to an OFF (open) state.

For example, as shown in FIG. 6, if batteries #1, #3, and #5 among a plurality of batteries are selected as target batteries, and the control priority is determined in the order of batteries #1, #3, and #5, the battery control apparatus may switch the pre-charge switch (SW_pc) of battery #1 to an ON (closed) state, then switch the positive main switch (MSW_p) of battery #1 to an ON (closed) state, and then switch the pre-charge switch (SW_pc) of battery #1 to an OFF (open) state.

Thereafter, the battery control apparatus may sequentially control the pre-charge switch (SW_pc) and the positive main switch (MSW_p) of battery #3 like battery #1, so that batteries #1 and #3 are sequentially connected to the DC link. Here, the battery control apparatus may switch the pre-charge switch (SW_pc) of battery #3 to an ON (closed) state at the time when the pre-charge switch (SW_pc) of battery #1 switches to an OFF (open) state.

Similarly, the battery control apparatus may sequentially control the pre-charge switch (SW_pc) and the positive main switch (MSW_p) of battery #5 like battery #1 and battery #3, but may switch the pre-charge switch (SW_pc) of battery #5 to an ON (closed) state at the time when the pre-charge switch (SW_pc) of battery #3 switches to an OFF (open) state.

If the switching time of each switch is 1 second, batteries #1, #3, and #5 may be connected to the DC link at 2 seconds, 4 seconds, and 6 seconds (at the time when MSW_p is closed) after the initiation of balancing control, respectively.

If the switch included in the battery corresponds to a relay, power supply by a power supply device is unnecessary when the relay is switched to an OFF (open) state. Accordingly, as shown in Fig. 6, if simultaneous control of the first target battery and the second target battery is performed in a control section where the pre-charge switch (SW_pc) is switched to an OFF (open) state, the parallel connection time of the target batteries may be shortened.

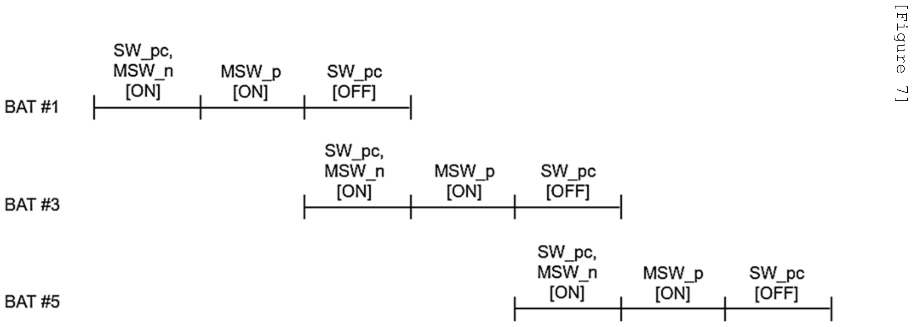

FIG. 7 is a reference diagram for explaining an operating method of a battery system according to another embodiment of the present invention. Hereinafter, with reference to FIG. 7, an embodiment of an operating method of a battery system in which a positive main switch, a negative main switch, and a pre-charge circuit are provided on an input/output path of a battery will be described.

The battery control apparatus may sequentially connect target batteries selected as balancing targets in parallel to the DC link according to priorities.

Here, the battery control apparatus may switch the pre-charge switch (SW_pc) and the negative main switch (MSW_n) of a first target battery (the target battery of the Nth priority) to an ON (closed) state, and then switch the positive main switch (MSW_p) of the first target battery to an ON (closed) state. Thereafter, the battery control apparatus may switch the pre-charge switch (SW_pc) of the first target battery to an OFF (open) state.

Thereafter, the battery control apparatus may switch the pre-charge switch (SW_pc) and the negative main switch (MSW_n) of a second target battery (the target battery with the N+1th priority) to an ON (closed) state, and then switch the positive main switch (MSW_p) of the second target battery to an ON (closed) state. Thereafter, the battery control apparatus may switch the pre-charge switch (SW_pc) of the second target battery to an OFF (open) state.

Here, the battery control apparatus may switch the pre-charge switch (SW_pc) and the negative main switch (MSW_n) of the second target battery to an ON (closed) state at the time when the pre-charge switch (SW_pc) of the first target battery is switched to OFF (open) state.

For example, as illustrated in FIG. 7, if batteries #1, #3, and #5 among a plurality of batteries are selected as target batteries and the control priorities are determined in the order of batteries #1, #3, and #5, the battery control apparatus may turn the pre-charge switch (SW_pc) and the negative main switch (MSW_n) of battery #1 to an ON (closed) state, then turn the positive main switch (MSW_p) of battery #1 to an ON (closed) state, and then turn the pre-charge switch (SW_pc) of battery #1 to an OFF (open) state.

Thereafter, the battery control apparatus may sequentially control the pre-charge switch (SW_pc), the positive main switch (MSW_p), and the negative main switch (MSW_n) of battery #3, like battery #1, so that batteries #1 and #3 are sequentially connected to the DC link. Here, the battery control apparatus may switch the pre-charge switch (SW_pc) and the negative main switch (MSW_n) of battery #3 to an ON (closed) state at the time when the pre-charge switch (SW_pc) of battery #1 is switched to an OFF (open) state.

Similarly, the battery control apparatus may sequentially control the pre-charge switch (SW_pc), the positive main switch (MSW_p), and the negative main switch (MSW_n) of battery #5 like battery #1 and battery #3, but may switch the pre-charge switch (SW_pc) and the negative main switch (MSW_n) of battery #5 to an ON (closed) state at the time when the pre-charge switch (SW_pc) of battery #3 is switched to an OFF (open) state.

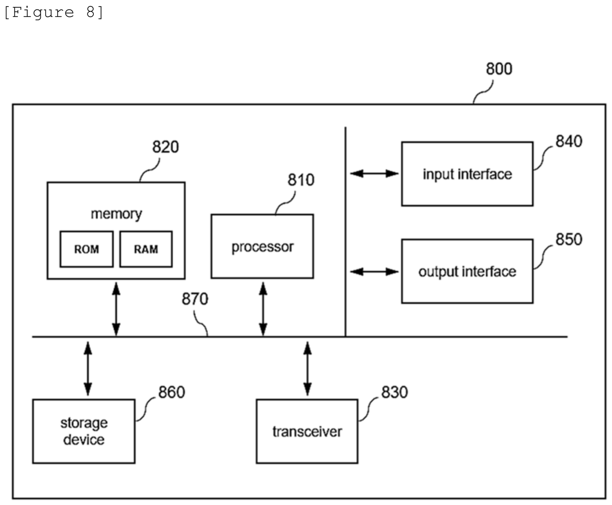

FIG. 8 is a block diagram of a battery control apparatus according to embodiments of the present invention.

The battery control apparatus 800 according to embodiments of the present invention may be located in a battery system including a plurality of batteries that may be connected in parallel on a DC link, and may be linked with a battery management device of each battery. For example, if the battery corresponds to a rack, the battery control apparatus 800 may correspond to a bank BMS (BBMS), a battery system controller (BSC), an energy management system (EMS), or a power management system (PMS) that is connected with a plurality of RBMSs.

The battery control apparatus 800 may include at least one processor 810, a memory 820 that stores at least one instruction executed through the processor, and a transceiver 830 that is connected to a network and performs communication.

The at least one instruction may include an instruction to select target batteries that are targets of parallel connection based on state information of the batteries; and an instruction to sequentially control main switches located on an input/output path of each target battery so that the target batteries are connected to the DC link at different times.

The instruction to select the target batteries includes an instruction to determine a battery that satisfies a predefined imbalance condition based on at least one of a voltage value or a state of charge (SOC) value, as a target battery.

The instruction to sequentially control main switches includes an instruction to determine priority for controlling the target batteries based on one of an identifier, a state value, and a location of the battery.

The instruction to sequentially control the main switches includes an instruction to switch the positive main switch of a first target battery to a closed state; and an instruction to subsequently switch the positive main switch of a second target battery to a closed state.

The battery system may further include pre-charge circuits, each of which is connected in parallel with the positive main switch of each of the plurality of batteries and includes a pre-charge resistor and a pre-charge switch. Here, the instruction to sequentially control the main switches includes an instruction to switch the pre-charge switch of the first target battery to a closed state and then, an instruction to switch the positive main switch of the first target battery to a closed state; and an instruction to subsequently switch the pre-charge switch of the second target battery to a closed state and then, to switch the positive main switch of the second target battery to a closed state.

The instruction to sequentially control the main switches includes an instruction to switch the positive main switch of the first target battery to a closed state and then, to switch the pre-charge switch of the first target battery to an open state; and an instruction to switch the pre-charge switch of the second target battery to a closed state at the time when the pre-charge switch of the first target battery is switched to an open state.

The battery control apparatus 800 may further include an input interface device 840, an output interface device 850, a storage device 860, etc. Respective components included in the battery control apparatus 800 may be connected by a bus 870 and may communicate with each other.

Here, the processor 810 may be a central processing unit (CPU), a graphics processing unit (GPU), or a dedicated processor on which methods according to embodiments of the present invention are performed. The memory (or storage unit) may include at least one of a volatile storage medium and a non-volatile storage medium. For example, the memory may include at least one of read only memory (ROM) and random access memory (RAM).

The operations of the method according to the embodiments of the present invention may be implemented as a computer-readable program or code on a computer-readable recording medium. **The computer-readable recording medium includes all types of recording devices in which data readable** by a **computer system is stored.** In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A battery system comprising:
a plurality of batteries; and
a battery control apparatus configured to control a main switch arranged on an input/output path of each of the plurality of batteries so that the batteries are connected in parallel to a direct current DC link,
wherein the battery control apparatus is further configured to select target batteries to be connected in parallel based on state information of the batteries and to control the target batteries to be connected in parallel while sequentially controlling respective main switches of the target batteries so that the target batteries are connected to the DC link at different times.

2. The system of claim 1, wherein the battery control apparatus is further configured to determine a battery that satisfies a predefined imbalance condition based on at least one of a voltage value or a state of charge SOC value, as a target battery.

3. The system of claim 1, wherein the battery control apparatus is further configured to determine priority for controlling the target batteries based on one of an identifier, a state value, and a location of the battery.

4. The system of claim 1, wherein the battery control apparatus is further configured to switch a positive main switch of a first target battery to a closed state and to subsequently switch a positive main switch of a second target battery to a closed state.

5. The system of claim 1, further comprising:
pre-charge circuits, each of which is connected in parallel with a positive main switch of each of the plurality of batteries and includes a pre-charge resistor and a pre-charge switch,
wherein the battery control apparatus is further configured to:
switch a pre-charge switch of a first target battery to a closed state and subsequently switch a positive main switch of the first target battery to a closed state; and
subsequently, switch a pre-charge switch of a second target battery to a closed state and subsequently switch a positive main switch of the second target battery to a closed state.

6. The system of claim 5, wherein the battery control apparatus is further configured to:
switch the positive main switch of the first target battery to a closed state and subsequently switch the pre-charge switch of the first target battery to an open state; and
switch the pre-charge switch of the second target battery to a closed state at the time when the pre-charge switch of the first target battery is switched to an open state.

7. The system of claim 5, wherein the battery control apparatus is further configured to:
switch the pre-charge switch and a negative main switch of the first target battery to a closed state and subsequently switch the positive main switch of the first target battery to a closed state; and
subsequently, switch the pre-charge switch and a negative main switch of the second target battery to a closed state and subsequently switch the positive main switch of the second target battery to a closed state.

8. The system of claim 7, wherein the battery control apparatus is further configured to:
switch the positive main switch of the first target battery to a closed state and subsequently switch the pre-charge switch of the first target battery to an open state; and
switch the pre-charge switch and the negative main switch of the second target battery to a closed state at the time when the pre-charge switch of the first target battery is switched to an open state.

9. The system of claim 1, wherein the battery corresponds to any one of a battery module, a battery pack, a battery rack, and a battery bank.

10. A method of operating a battery system by a battery control apparatus located in the battery system including a plurality of batteries which are capable of being connected in parallel to a direct current DC link, the method comprising:
selecting target batteries that are targets of parallel connection based on state information of the plurality of batteries; and
sequentially controlling main switches arranged on input/output paths of respective target batteries so that the target batteries are connected to the DC link at different times.

11. The method of claim 10, wherein the selecting the target batteries includes:
determining a battery that satisfies a predefined imbalance condition based on at least one of a voltage value or a state of charge SOC value, as a target battery.

12. The method of claim 10, wherein the sequentially controlling the main switches includes:
determining priority for controlling the target batteries based on one of an identifier, a state value, and a location of the battery.

13. The method of claim 10, wherein the sequentially controlling the main switches includes:
switching a positive main switch of a first target battery to a closed state; and
subsequently switching a positive main switch of a second target battery to a closed state.

14. The method of claim 10, wherein the battery system further includes pre-charge circuits, each of which is connected in parallel with the positive main switch of each of the plurality of batteries and includes a pre-charge resistor and a pre-charge switch, and
wherein the sequentially controlling the main switches includes:
switching a pre-charge switch of a first target battery to a closed state and subsequently switching a positive main switch of the first target battery to a closed state; and
subsequently, switching a pre-charge switch of a second target battery to a closed state and subsequently switching a positive main switch of the second target battery to a closed state.

15. The method of claim 14, wherein the sequentially controlling the main switches includes:
switching the positive main switch of the first target battery to a closed state and subsequently switching the pre-charge switch of the first target battery to an open state; and
switching the pre-charge switch of the second target battery to a closed state at the time when the pre-charge switch of the first target battery is switched to an open state.

16. A battery control apparatus located in a battery system including a plurality of batteries which are capable of being connected in parallel to a direct current DC link, the apparatus comprising:
at least one processor; and
a memory configured to store at least one instruction executed by the at least one processor,
wherein the at least one instruction includes:
an instruction to select target batteries that are targets of parallel connection based on state information of the batteries; and
an instruction to sequentially control main switches arranged on input/output paths of respective target batteries so that the target batteries are connected to the DC link at different times.
